# EUROPEAN PATENT SPECIFICATION

(11) **EP 4 080 915 B1**
(45) Date of publication and mention of the grant of the patent: **31.01.2024**
(21) Application number: 22189861.2
(22) Date of filing: 11.08.2022
(51) Int. Cl.: H04W 4/40, H04L 69/40, H04W 76/19, H04W 76/11, H04W 76/18, G06F 11/07, G06F 16/955, G06F 16/9535

(54) **CONNECTION METHOD AND APPARATUS, ELECTRONIC DEVICE, STORAGE MEDIUM AND PROGRAM PRODUCT**
VERBINDUNGSVERFAHREN UND -GERÄT, ELEKTRONISCHES GERÄT, SPEICHERMEDIUM UND PROGRAMMPRODUKT
PROCEDE ET APPAREIL DE CONNEXION, DISPOSITIF ELECTRONIQUE, SUPPORT DE STOCKAGE ET PRODUIT DE PROGRAMME

(30) Priority: 11.08.2021 CN 202110919098
(43) Date of publication of application: 26.10.2022
(73) Proprietor: Apollo Intelligent Connectivity (Beijing) Technology Co., Ltd., Beijing 100176 (CN)
(72) Inventor: LEI, Xinxue, Beijing, 100176 (CN)
(74) Representative: J A Kemp LLP

(56) References cited:
- KR-A- 20150 087 840
- US-A1- 2019 052 522

## Description

### TECHNICAL FIELD

The present disclosure relates to the internet of vehicles technology in the technical field of artificial intelligence and, in particular, to a connection method and apparatus, an electronic device, a storage medium, and a program product.

### BACKGROUND

With the development of an intelligent on-board system, interconnection between a mobile phone and a vehicle becomes more and more frequent. Generally, a driver and a passenger want to interconnect a mobile phone, a tablet computer and other terminals with the vehicle, so as to display content on the terminal through an output apparatus of the vehicle.

The terminal and the vehicle can be interconnected in a wired or wireless manner, for example, by using a USB connection, a Wi-Fi connection, etc. However, due to uncontrollability of hardware and software environments of the terminal, the intelligent on-board system, a USB data line, etc., there are problems, in actual use, like the terminal and the vehicle cannot be connected or a connection therebetween is disconnected, as a result, a function of interconnecting the terminal and the vehicle cannot be used normally.

At present, when the above connection problem between the terminal and the vehicle occurs, a user can only find a solution by himself or ask customer service for help, which is very inefficient.

US 2019 0052522 A1 discloses a vehicle system including a telematics control unit (TCU) coupled to a plurality of vehicle controllers. The TCU is configured to periodically record in a log wireless activity data relating to an authentication, attachment, signaling, detachment, and handover procedure of the TCU to provide one or more remote vehicle services. The TCU is further configured to, responsive to detecting a cellular malfunction from the logged data, wirelessly transmit at least a portion of the log that corresponds to the cellular malfunction offboard the vehicle for a remote server configured to diagnose operation of the TCU.

### SUMMARY

The invention is set out in the appended set of claims. The present disclosure provides a connection method and apparatus, an electronic device, a storage medium and a program product that improve the connection efficiency.

According to an aspect of the present disclosure, there is provided a connection method, where the method includes:
when it is determined that a connection between a terminal and a vehicle fails, obtaining identification information of the vehicle and log information of the terminal;
sending the identification information and the log information to a server, and receiving at least one connection solution that is issued by the server and matches the identification information and the log information; and
controlling, according to the at least one connection solution, the terminal to connect with the vehicle.

According to another aspect of the present disclosure, there is provided a connection method, where the method includes:
receiving identification information of a vehicle sent by a terminal, and receiving log information of a failed connection between the terminal and the vehicle;
determining at least one connection solution matching both the identification information and the log information; and
sending the at least one connection solution to the terminal.

According to a yet another aspect of the present disclosure, there is provided a connection apparatus, where the apparatus includes:
an obtaining module, configured to obtain, when it is determined that a connection between a terminal and a vehicle fails, identification information of the vehicle and log information of the terminal;
a sending module, configured to send the identification information and the log information to a server, and receive at least one connection solution that is issued by the server and matches the identification information and the log information; and
a connection module, configured to control, according to the at least one connection solution, the terminal to connect with the vehicle.

According to a yet another aspect of the present disclosure, there is provided a connection apparatus, where the apparatus includes:
a receiving module, configured to receive identification information of a vehicle sent by a terminal, and receive log information of a failed connection between the terminal and the vehicle;
a first determining module, configured to determine at least one connection solution matching the identification information and the log information; and
a first sending module, configured to send the at least one connection solution to the terminal.

According to yet another aspect of the present disclosure, there is provided an electronic device, including:
at least one processor; and
a memory connected in communication with the at least one processor; where,
the memory stores instructions executable by the at least one processor, and the instructions are executed by the at least one processor to cause the at least one processor to perform the method according to the first aspect or the second aspect.

According to still another aspect of the present disclosure, there is provided a non-transitory computer-readable storage medium storing computer instructions, which cause a computer to perform the method according to the first aspect or the second aspect above.

According to still another aspect of the present disclosure, there is provided a computer program product, where the program product includes: a computer program stored in a readable storage medium, at least one processor of an electronic device can read the computer program from the readable storage medium, and the at least one processor executes the computer program to enable the electronic device to perform the method according to the first aspect or the second aspect.

On the basis of the technical solution of the present disclosure, the connection efficiency between the terminal and the vehicle is improved.

It should be understood that what is described herein is not intended to identify key or critical features of embodiments of the present disclosure, nor is it intended to limit the scope of the present disclosure. Other features of the present disclosure will become easily understood from the following description.

### BRIEF DESCRIPTION OF THE DRAWINGS

The accompanying drawings are for better understanding of the solution and do not constitute a limitation to the present disclosure, in which:
FIG. 1 is a schematic diagram of an application scenario of a connection method according to an embodiment of the present disclosure;
FIG. 2 is schematic flowchart I of a connection method according to an embodiment of the present disclosure;
FIG. 3 is schematic flowchart II of a connection method according to an embodiment of the present disclosure;
FIG. 4 is schematic structural diagram I of a connection apparatus according to an embodiment of the present disclosure;
FIG. 5 is schematic structural diagram II of a connection apparatus according to an embodiment of the present disclosure; and
FIG. 6 is a schematic block diagram of an electronic device used to implement the connection method according to an embodiment of the present disclosure.

### DESCRIPTION OF EMBODIMENTS

The exemplary embodiments of the present disclosure are described below with reference to the accompanying drawings, which include various details of the embodiments of the present disclosure for understanding the present disclosure, and should be considered as merely exemplary. Therefore, those of ordinary skill in the art should realize that various changes and modifications can be made to the embodiments described herein without departing from the scope of the present disclosure. Likewise, for clarity and conciseness, descriptions of well-known functions and structures are omitted below.

In the case the terminal and the vehicle are connected in a wired or wireless manner, there are problems like failed connection or disconnection. For example, the terminal is connected to the vehicle through a USB cable. Connection failure can occur for various reasons such as incompatibility of the operating systems, software versions, data transmission protocols of the terminal and on-board system, unstable transmission, or device hardware problems like USB cable failure and USB cable does not support data transfer function.

Typically, when the above problem occurs, the user can only find the solution by himself, for example, find the solution to the problem in relevant technical forums or discussion groups, or ask customer service staff for help. It is very inefficient and may not find the solution that the user only find the solution by himself, and it is also very inefficient to ask the customer service staff for help, which seriously affect normal use for the user.

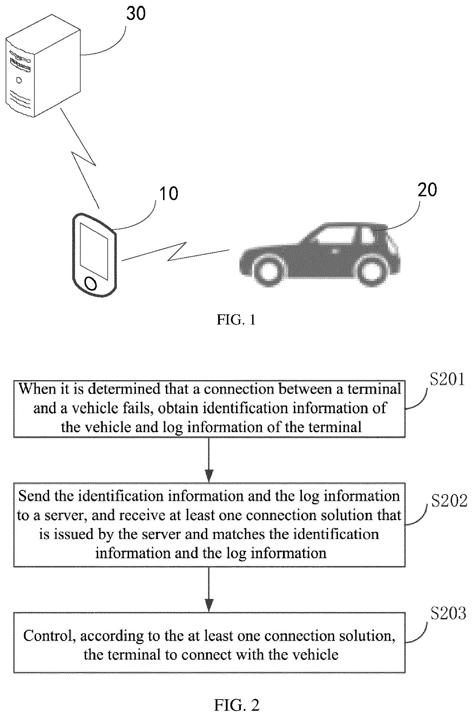

For this reason, a connection method is proposed in the embodiments of the present disclosure. FIG. 1 is a schematic diagram of an application scenario of a connection method according to an embodiment of the present disclosure. Where a terminal 10 and a vehicle 20 can be connected in a wired or wireless manner, so as to display the content on the terminal 10 through a display apparatus of the vehicle 20. The connection between the terminal 10 and the vehicle 20 may be the case that the terminal 10 is connected to the vehicle body and on-board system of the vehicle 20, an application program for vehicle body interconnection may also be installed in the terminal 10, and the terminal 10 makes the content on the terminal 10 be displayed on the vehicle 20 through the application program. Furthermore, the server 30 can wirelessly communicate with the terminal 10. In the method of the embodiment of the present disclosure, in the case of a failed connection between the terminal 10 and the vehicle 20, the terminal 10 automatically obtains identification information of the vehicle 20 and log information of the terminal 10, and then send it to a server 30, so that the server 30 can determine a matching connection solution according to received information, and then send the matching connection solution to the terminal 10, such that the terminal 10 can automatically reconnect with the vehicle 20 according to the connection solution. Therefore, it is achieved that the connection solution is automatically obtained in the case of failed connection, without manual intervention by the user, which improves connection efficiency and connection success rate.

The present disclosure provides a connection method and apparatus, an electronic device, a storage medium and a program product, which are applied to the fields of artificial intelligence, internet of vehicles, and intelligent transportation, so as to improve the connection efficiency between the terminal and the vehicle.

Hereinafter, the connection method provided by the present disclosure will be described in detail through specific embodiments. Understandably, the following specific embodiments may be combined with each other, and the same or similar concepts or processes may not be repeated in some embodiments.

FIG. 2 is schematic flowchart I of a connection method according to an embodiment of the present disclosure. An executive entity of the method is a terminal. As shown in FIG. 2, the method includes the following.

S201, when it is determined that a connection between a terminal and a vehicle fails, obtain identification information of the vehicle and log information of the terminal.

The terminal and the vehicle may be connected in a wired or wireless manner. For example, the terminal is connected to the vehicle through a USB cable, and the failed connection between the terminal and the vehicle may be a case where after the terminal and the vehicle are connected through the USB cable, the terminal receives a connection failure response or the terminal does not receive a response. For example, the terminal is connected to the vehicle through Wi-Fi, and the failed connection between the terminal and the vehicle may be the case where after sending a Wi-Fi connection request to the vehicle, the terminal receives the connection failure response or does not receive a response.

The identification information of the vehicle can be used to indicate information such as the software version or hardware model of the vehicle. For example, the identification information of the vehicle may be a channel number of vehicle body, and the terminal can obtain the identification information of the vehicle from the vehicle, or the terminal may store the identification information of the vehicle in advance.

The log information is recorded when the connection between terminal and the vehicle is in progress. In the case of failed connection between the terminal and the vehicle, the log information of the terminal may record error information of the failed connection, etc., which can be used to analyze the reason of the failed connection.

S202, send the identification information and the log information to a server, and receive at least one connection solution that is issued by the server and matches the identification information and the log information.

In the case of the failed connection between the terminal and the vehicle, the terminal obtains the above log information and identification information of the vehicle, and sends the log information and identification information of the vehicle to the server, so that the server can determine the matching connection solution according to the log information and the identification information of the vehicle, that is, determine the solution for solving the connection failure between the terminal and the vehicle. The server can determine at least one connection solution, and deliver, at the same time, the at least one connection solution to the terminal, so as to improve efficiency.

S203, control, according to the at least one connection solution, the terminal to connect with the vehicle.

After receiving the at least one connection solution issued by the server, the terminal may try to connect with the vehicle again according to the at least one connection solution. For example, the connection solution may be to reconnect with the vehicle after modifying the configuration/settings of the terminal, and the terminal can perform such connection solution automatically without user operation.

In the connection method provided by the embodiments of the present disclosure, in case of the failed connection between the terminal and the vehicle, the terminal automatically obtains the identification information of the vehicle and the log information of the terminal and then sends the identification information of the vehicle and the log information of the terminal to the server, so that the server can determine the matching connection solution according to the received information and then sends the matching connection solution to the terminal, so as to enable the terminal to automatically reconnect with the vehicle according to the connection solution. In this way, the connection solution can be automatically obtained in the case of failed connection, without manual intervention by the user, which can improve the connection efficiency, as well as the connection success rate.

On the basis of the above embodiment, how the terminal obtains the identification information of the vehicle will be described.

In case the terminal displays the content on a display apparatus of the vehicle, typically, via a wired (such as a USB cable) connection or a Wi-Fi connection, if the USB connection fails or the Wi-Fi connection fails, the terminal can obtain the identification information of the vehicle by using the Bluetooth connection between the terminal and the vehicle.

Taking the USB connection between the terminal and the vehicle as an example, when the USB connection is established between the terminal and the vehicle, the vehicle will carry the identification information of the vehicle in the first message interacting with the terminal. Therefore, when the USB connection is established between the terminal and the vehicle and the connection fails after message interaction, the terminal can obtain the identification information of the vehicle in the process of establishing the USB connection. However, when the USB connection is established between the terminal and the vehicle, there is no message interaction between the terminal and the vehicle due to hardware problems or other reasons, the terminal cannot obtain the identification information of the vehicle in the process of establishing the USB connection. In this case, the terminal can obtain the identification information of the vehicle by using the Bluetooth connection between the terminal and the vehicle.

For the case of obtaining the identification information of the vehicle by the terminal using the Bluetooth connection between the terminal and the vehicle, it is described in two cases. In one case, before the USB connection is performed between the terminal and the vehicle, the user enables the Bluetooth connection between the terminal and the vehicle, after the terminal is successfully connected with the vehicle through the Bluetooth, the smart interconnection application of the terminal can be pulled up, and the smart interconnection application can obtain, in the case of the failed USB connection, the identification information of the vehicle through the Bluetooth connection. In another case, before the USB connection is performed between the terminal and the vehicle, the user enables the above application instead of the Bluetooth connection between the terminal and the vehicle, the application can control, in the case of a failed USB connection between the terminal and the vehicle, the terminal to establish a Bluetooth connection with the vehicle, or the application can prompt the user to enable the Bluetooth connection to obtain the identification information of the vehicle through the Bluetooth connection. Therefore, it is ensured that in the case the identification information of the vehicle cannot be obtained in the process of establishing the USB connection, the terminal can obtain the identification information of the vehicle through Bluetooth.

Optionally, if the terminal cannot obtain the identification information of the vehicle in the process of establishing the USB connection, the terminal can first obtain location information of the terminal, and then determine, when the location information of the terminal ranges within a preset location scope, the identification information of the vehicle in the historical connection record of the terminal as the identification information of the vehicle. For example, the preset location range may be a common location in the user's daily life, like a family or a company, and the user usually connects his vehicle through the terminal at such locations. Therefore, when the location information of the terminal ranges within the preset location scope, it is regarded that the user needs to connect his vehicle, so the identification information of the vehicle in the historical connection record of the terminal may be determined as the identification information of the vehicle, thereby ensuring that the terminal can still obtain the identification information of the vehicle if the identification information of the vehicle is not obtained in the process of establishing the USB connection.

On the basis of the above embodiment, it will be described the case that how the terminal connects with the vehicle after receiving at least one connection solution issued by the server.

After receiving the at least one connection solution issued by the server, the terminal performs the at least one connection solution in sequence. If the terminal still cannot connect with the vehicle after performing the at least one connection solution, the log information of performing the at least one connection solution is re-sent to the server, and the at least one connection solution that is issued by the server and matches both the identification information and the re-sent log information is received. Such step is repeated until the terminal is successfully connected with the vehicle or until the information of the non-connection solution issued by the server is received.

The terminal performs, in sequence, the at least one connection solution issued by the server; in the case of a successful connection, the next connection solution is not required to be performed; in the case of a failed connection, the next connection solution is required to be performed. If the terminal still fails to connect with the vehicle after all the solutions are performed, the terminal re-sends the log information of performing the connection solution to the server, so as to enable the server to re-match the connection solution and issue a new connection solution, so that the terminal can re-perform the connection solution. The above process is repeated until the connection is successful, thereby realizing the complete automatic reconnection in the case of the failed connection. Alternatively, the server cannot re-determine a matching connection solution, so the server can issue the information of the non-connection solution, thus the terminal can end the connection process, thereby avoiding an infinite loop of the process of obtaining the connection solution.

It should be noted that when delivering at least one connection solution to the terminal, the server can also send the matching information of each connection solution at the same time. The higher the matching degree of the connection solution, the higher the connection success rate of the terminal after performing a connection. Therefore, the terminal can sort the at least one connection solution according to matching degree from high to low, and then perform the at least one connection solution, in sequence, from the connection solution having the highest matching degree. In this way, the connection efficiency can be improved, and the connection between the terminal and the vehicle can be realized as soon as possible.

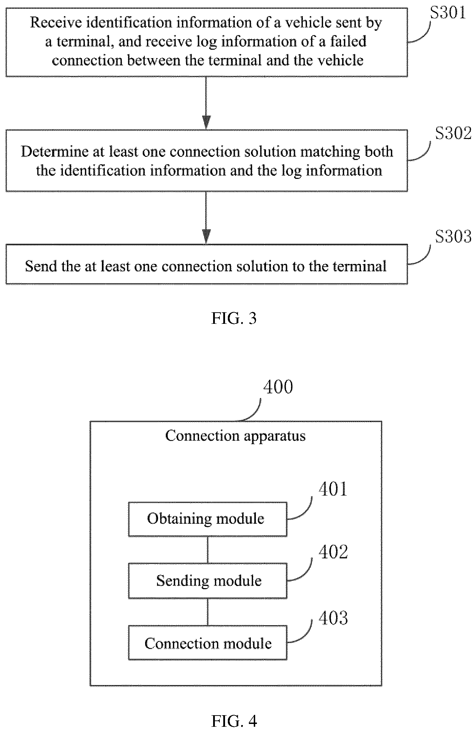

FIG. 3 is schematic flowchart II of a connection method according to an embodiment of the present disclosure. The executive entity of the method is a server, which can be a cloud server. As shown in FIG. 3, the method includes the following.

S301, receive identification information of a vehicle sent by a terminal, and receive log information of a failed connection between the terminal and the vehicle.

S302, determine at least one connection solution matching both the identification information and the log information.

S303, send the at least one connection solution to the terminal.

After receiving the log information of the failed connection between the terminal and the vehicle sent by the terminal and receiving the identification information of the vehicle, the server may analyze the reason for the failed connection according to the error message in the log information, and determine the matching solution by combining the identification information of the vehicle, that is, determine the at least one connection solution matching both the identification information and the log information, and send the connection solution to the terminal, so that the terminal can reconnect with the vehicle according to the connection solution. Therefore, it is realized that the connection solution is automatically matched according to the information collected by the terminal in the case of the failed connection, without manual intervention by the user, which improves connection efficiency and connection success rate.

On the basis of the above embodiment, how the server determines the at least one connection solution matching the identification information and the log information will be described.

After receiving the identification information and the log information, the server determines an error keyword in the log information, and generates a feature value of the error keyword; and inputs the identification information and the feature value into the connection solution matching model to obtain the at least one connection solution.

For example, the error keyword in the log information is a null point, eio (error in operation, also known as read and write error), or the specific business error log in the application and error stack information, etc. The server generates the corresponding feature value according to the error keyword in the log information, and further determines, according to the feature value of the log information and the identification information of the vehicle, the matching connection solution by using a connection solution matching model, which ensures the accuracy of the connection solution. In this case, there may be one or more connection solutions.

Optionally, the identification information and feature value are input into the connection solution matching model to obtain the at least one connection solution and the matching degree of each connection solution. Where the matching degree of each connection solution may be related to the similarity between the feature value input to the model and the feature value corresponding to the connection solution, and the higher the similarity between the feature value input to the model and the feature value corresponding to the connection solution is, the higher the matching degree of the connection solution is. The connection solution matching model can sort, according to the matching degree, the connection solution matched according to both the identification information and the feature value, and the connection solution whose matching degree is higher than a preset threshold is determined as the obtained at least one connection solution. Correspondingly, the server may send the at least one connection solution and the matching degree of each connection solution to the terminal, so that the terminal can preferentially perform the connection solution with higher matching degree according to the sequence of the matching degrees of the connection solutions, thereby improving the connection efficiency.

On the basis of the above embodiment, if the terminal still fails to connect with the vehicle after performing the at least one connection solution issued by the server, the terminal can re-send the new log information to the server, that is, the new log information corresponding to the at least one connection solution when the terminal performs the at least one connection solution. When receiving the new log information corresponding to the at least one connection solution sent by the terminal, the server uses the new log information to train the connection solution matching model, to obtain an updated connection solution matching model; uses the updated connection solution matching model to obtain the information of at least one new connection solution or non-connection solution corresponding to the new failure log; and sends the information of the at least one new connection solution or non-connection solution to the terminal.

When receiving the new log information corresponding to the at least one connection solution sent by the terminal, the server can determine that the previously issued at least one connection solution cannot solve the problem of connection failure, so it is necessary to retrain the connection solution matching model to obtain the updated connection solution matching model. Afterwards, the error keyword in the new log information can be extracted according to the above method, the feature value can be generated and then input into the updated connection solution matching model, to obtain the at least one new connection solution, which is then issued to the terminal. Therefore, the terminal is enabled to try to re-connect to the vehicle, and the log information sent by the terminal is used, which realizes automatic learning of the server and improves the accuracy of the connection solution. Alternatively, in some cases, the server cannot determine a new connection solution, that is, the connection solution cannot be matched, and the server cannot resolve the connection failure temporarily. At this point, the information of the non-connection solution can be output to the terminal, so that the terminal ends the connection to avoid the infinite loop of the process of obtaining the connection solution.

FIG. 4 is schematic structural diagram I of a connection apparatus according to an embodiment of the present disclosure. As shown in FIG. 4, connection apparatus 400 includes:
an obtaining module 401, configured to obtain, when it is determined that a connection between a terminal and a vehicle fails, identification information of the vehicle and log information of the terminal;
a sending module 402, configured to send the identification information and the log information to a server, and receive at least one connection solution that is issued by the server and matches the identification information and the log information; and
a connection module 403, configured to control, according to the at least one connection solution, the terminal to connect with the vehicle.

In an implementation, the connection module 403 includes:
an execution unit, configured to perform the at least one connection solution in sequence; and re-send, if the connection between the terminal and the vehicle still fails after performing the at least one connection solution, the log information of performing the at least one connection solution to the server, receive at least one connection solution that is issued by the server and matches both the identification information and re-sent log information, and repeat such step until the terminal is successfully connected with the vehicle or until information of a non-connection solution issued by the server is received.

In an implementation, the at least one connection solution has corresponding matching degree information, and the execution unit includes:
an execution subunit, configured to sort the at least one connection solution according to matching degree from high to low, and perform the at least one connection solution, in sequence, from a connection solution having highest matching degree.

In an implementation, a failed connection between the terminal and the vehicle includes: a failed wired connection or a failed Wi-Fi connection between the terminal and the vehicle; and
the obtaining module 401 includes:
a first obtaining unit, configured to obtain the identification information of the vehicle by using a Bluetooth connection between the terminal and the vehicle.

In an implementation, the obtaining module 401 includes:
a second obtaining unit, configured to obtain location information of the terminal; and
a determining unit, configured to determine, when the location information of the terminal ranges within a preset location scope, the identification information of the vehicle in historical connection records of the terminal as the identification information of the vehicle.

The apparatus of embodiments of the present disclosure can be used to perform the connection method performed by the terminal in the above method embodiments, and the implementation principles and technical effects thereof are similar, which will not be repeated herein.

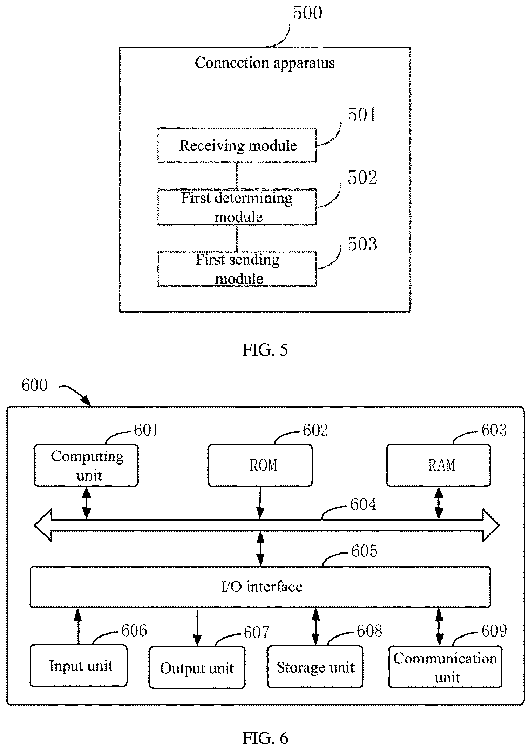

FIG. 5 is schematic structural diagram II of a connection apparatus according to an embodiment of the present disclosure. As shown in FIG. 5, the connection apparatus 500 includes:
a receiving module 501, configured to receive identification information of a vehicle sent by a terminal, and receive log information of a failed connection between the terminal and a vehicle;
a first determining module 502, configured to determine at least one connection solution matching the identification information and the log information; and
a first sending module 503, configured to send the at least one connection solution to the terminal.

In an implementation, the first determining module 502 includes:
a determining unit, configured to determine the error keyword in the log information, and generate a feature value of the error keyword; and
a first matching unit, configured to input the identification information and the feature value into a connection solution matching model to obtain the at least one connection solution.

In an implementation, the first matching unit includes:
a matching subunit, configured to input the identification information and the feature value into the connection solution matching model to obtain the at least one connection solution and matching degree of each connection solution; and
the sending module includes:
   a sending unit, configured to send the at least one connection solution and the matching degree of each connection solution to the terminal.

In an implementation, the connection apparatus 500 further includes:
a training module, configured to train, in the case of receiving new log information corresponding to the at least one connection solution sent by the terminal, the connection solution matching model by using the new log information, so as to obtain an updated connection solution matching model;
a second determining module, configured to obtain the information of at least one new connection solution or non-connection solution corresponding to new failure log by using the updated connection solution matching model; and
a second sending module, configured to send the information of the at least one new connection solution or the non-connection solution to the terminal.

The apparatus in the embodiments of the present disclosure can be used to perform the connection method performed by the server in the above method embodiments, and the implementation principles and technical effects thereof are similar, which will not be repeated herein.

According to an embodiment of the present disclosure, the present disclosure further provides an electronic device and a non-transitory computer-readable storage medium storing the computer instruction.

According to an embodiment of the present disclosure, the present disclosure further provides a computer program product, including: a computer program which is stored in a readable storage medium, at least one processor of the electronic device may read the computer program from the readable storage medium, and the at least one processor executes the computer program to cause the electronic device to perform the solution provided by any of the above embodiments.

FIG. 6 is a schematic block diagram of an electronic device used to implement the connection method according to an embodiment of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile apparatuses, such as a personal digital processor, a cellular phone, a smart phone, a wearable device, and other similar computing apparatuses. The components shown herein, their connections and relationships, and their functions are by way of example only, and are not intended to limit implementations of the present disclosure described and/or claimed herein. The electronic device may be an aforementioned terminal or server.

As shown in FIG. 6, the electronic device 600 includes a computing unit 601, which can perform, according to a computer program stored in a read-only memory (ROM) 602 or a computer program loaded from the storage unit 608 to a random access memory (RAM) 603, various appropriate actions and processes. In the RAM 603, various programs and data required for the operation of the device 600 can also be stored. The computing unit 601, the ROM 602, and the RAM 603 are connected to each other through a bus 604. An input/output (I/O) interface 605 is also connected to the bus 604.

Multiple components in the device 600 are connected to the I/O interface 605, including: an input unit 606, such as a keyboard, a mouse, etc.; an output unit 607, such as various types of displays, speakers, etc.; the storage unit 608, such as a magnetic disk, an optical disc, etc.; and a communication unit 609, such as a network card, a modem, and a wireless communication transceiver, etc. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include, but are not limited to, a central processing unit (CPU), a graphics processing unit (GPU), various dedicated artificial intelligence (AI) computing chips, various computing units that run machine learning model algorithms, a digital signal processor (DSP), any appropriate processor, controller, microcontroller, etc. The computing unit 601 performs the various methods and processing described above, for example, a connection method. For example, in some embodiments, the connection method may be implemented as a computer software program, which is tangibly contained in a machine-readable medium, such as the storage unit 608. In some embodiments, part or entire computer program may be loaded and/or installed on the device 600 via the ROM 602 and/or the communication unit 609. When the computer program is loaded into the RAM 603 and executed by the computing unit 601, one or more steps of the connection method described above can be performed. Alternatively, in other embodiments, the computing unit 601 may be configured to perform, in any other suitable manner (for example, by means of firmware), the connection method.

Various implementations of the systems and technologies described herein can be implemented in a digital electronic circuit system, an integrated circuit system, a field programmable gate array (FPGA), an application specific integrated circuit (ASIC), an application-specific standard product (ASSP), a system-on-chip system (SOC), a complex programmable logic device (CPLD), computer hardware, firmware, software, and/or combinations thereof. These various implementations may include: being implemented in one or more computer programs. The one or more computer programs may be executed and/or interpreted on a programmable system including at least one programmable processor. The programmable processor may be a dedicated or general programmable processor, may receive data and instructions from a storage system, at least one input apparatus, and at least one output apparatus, and transmit data and instructions to the storage system, the at least one input apparatus and the at least one output apparatus.

The program code used to implement the method of the present disclosure can be written in any combination of one or more programming languages. These program codes can be provided to a processor or a controller of a general-purpose computer, a special-purpose computer, or other programmable data processing apparatuses, so that when the program codes are executed by the processor or the controller, the functions/operations specified in the flowchart and/or the block diagram are implemented. The program code can be executed entirely on the machine and partly on the machine, and the program code, as an independent software package, can be executed partly on the machine and partly on the remote machine, or the program code can be executed completely on the remote machine or the server.

In the context of the present disclosure, a machine-readable medium may be a tangible medium, which may contain or store a program for use by the instruction execution system, apparatus, or device, or the machine-readable medium may include the program used in conjunction with the instruction execution system, apparatus, or device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or may be any suitable combination of the above. More specific examples of machine-readable storage medium would include the electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any appreciate combination of the above.

In order to provide interaction with the user, the system and the technique described herein may be implemented on a computer, and the computer has: a display apparatus for displaying information to the user (such as a CRT (cathode ray tube) or an LCD (liquid crystal display) monitor); and a keyboard and a pointing apparatus (such as a mouse or a trackball), and the user may provide an input to the computer through the keyboard and the pointing apparatus. Other kinds of apparatuses may also be used to provide the interaction with the user; for example, feedback provided to the user may be any form of sensor feedback (e.g., visual feedback, auditory feedback, or tactile feedback); and may receive the input from the user in any form (including an acoustic input, a voice input, or a tactile input).

The system and the technique described herein may be implemented in a computing system that includes back-end components (for example, as a data server), or a computing system that includes intermediate components (for example, an application server), or a computing system that includes front-end components (for example, a user computer with a graphical user interface or a web browser, through which the user may interact with the implementations of the system and the technique described herein), or a computing system that includes any combination of the back-end components, the intermediate components, or the front-end components. The components of the system may be interconnected by any form or medium of digital data communications (e.g., a communication network). Examples of the communication network include: a local area network (LAN), a wide area network (WAN), and Internet

The computing system may include a client and a server. The client and the server are generally far away from each other, and generally interact with each other through the communication network. A relationship between the client and the server is generated by computer programs running on a corresponding computer and having a client-server relationship for each other. The server can be a cloud server, also known as a cloud computing server or a cloud host, which is a host product in the cloud computing service system, to solve defects of difficult management and weak business scalability in traditional physical host and VPS service ("Virtual Private Server", or VPS for short). The server can also be a server of a distributed system or a server combined with a blockchain.

It should be understood that the various forms of processes shown above can be used to reorder, add or delete steps. For example, the steps described in the present application can be performed in parallel, sequentially, or in a different order, as long as the desired result of the technical solution disclosed in the present disclosure can be achieved, which is not limited herein.

The above specific implementations do not constitute a limitation onto the scope of protection of the present disclosure. Those skilled in the art should understand that various modifications, combinations, sub-combinations, and substitutions can be made according to design requirements and other factors. Any amendments, equivalent substitutions and improvements made within the principles of the present disclosure shall be included in the scope of protection of the present disclosure.

## Claims

1. A connection method, comprising:
when it is determined that a connection between a terminal and a vehicle fails, obtaining (S201) identification information of the vehicle and log information of the terminal;
sending (S202) the identification information and the log information to a server, and receiving at least one connection solution that is issued by the server and matches the identification information and the log information; and
controlling (S203), according to the at least one connection solution, the terminal to connect with the vehicle,
wherein the controlling (S203), according to the at least one connection solution, the terminal to connect with the vehicle comprises:
performing the at least one connection solution in sequence; and re-sending, if the connection between the terminal and the vehicle still fails after performing the at least one connection solution, the log information of performing the at least one connection solution to the server, receiving at least one connection solution that is issued by the server and matches both the identification information and re-sent log information, and repeating such step until the terminal is successfully connected with the vehicle or until information of a non-connection solution issued by the server is received,
wherein the log information comprises an error keyword and a feature value of the error keyword is generated by the error keyword,
wherein the identification information and the feature value are inputted into a connection solution matching model to obtain the at least one connection solution.

2. The method according to claim 1, wherein the at least one connection solution has corresponding matching degree information, and the performing the at least one connection solution in sequence comprises:
sorting the at least one connection solution according to matching degree from high to low, and performing the at least one connection solution, in sequence, from a connection solution having a highest matching degree.

3. The method according to any one of claims 1 to 2, wherein a failed connection between the terminal and the vehicle fails comprises:
a failed wired connection or a failed Wi-Fi connection between the terminal and the vehicle; and
the obtaining the identification information of the vehicle comprises:
obtaining the identification information of the vehicle by using a Bluetooth connection between the terminal and the vehicle; optionally,
the obtaining the identification information of the vehicle comprises:
obtaining location information of the terminal; and
determining, when the location information ranges within a preset location scope, the identification information of the vehicle in historical connection records of the terminal as the identification information of the vehicle.

4. A connection method, comprising:
receiving (S301) identification information of a vehicle sent by a terminal, and receiving log information of a failed connection between the terminal and the vehicle;
determining (S302) at least one connection solution matching both the identification information and the log information; and
sending (S303) the at least one connection solution to the terminal,
wherein the determining (S302) the at least one connection solution matching both the identification information and the log information comprises:
determining an error keyword in the log information, and generating a feature value of the error keyword; and
inputting the identification information and the feature value into a connection solution matching model to obtain the at least one connection solution.

5. The method according to claim 4, wherein the inputting the identification information and the feature value into the connection solution matching model to obtain the at least one connection solution comprises:
inputting the identification information and the feature value into the connection solution matching model to obtain the at least one connection solution and matching degree of each connection solution; and
the sending (S303) the at least one connection solution to the terminal comprises:
sending the at least one connection solution and the matching degree of each connection solution to the terminal.

6. The method of any one of claims 4 to 5, further comprising:
training, in the case of receiving new log information corresponding to the at least one connection solution sent by the terminal, the connection solution matching model by using the new log information, so as to obtain an updated connection solution matching model;
obtaining information of at least one new connection solution or non-connection solution corresponding to a new failure log by using the updated connection solution matching model; and
sending the information of the at least one new connection solution or the non-connection solution to the terminal.

7. A connection apparatus (400), comprising:
an obtaining module (401), configured to obtain, when it is determined that a connection between a terminal and a vehicle fails, identification information of the vehicle and log information of the terminal;
a sending module (402), configured to send the identification information and the log information to a server, and receive at least one connection solution that is issued by the server and matches the identification information and the log information; and
a connection module (403), configured to control, according to the at least one connection solution, the terminal to connect with the vehicle,
wherein the connection module (403) comprises:
an execution unit, configured to perform the at least one connection solution in sequence; and if the connection between the terminal and the vehicle still fails after performing the at least one connection solution, re-send, the log information of performing the at least one connection solution to the server, receive at least one connection solution that is issued by the server and matches both the identification information and re-sent log information, and repeat such step until the terminal is successfully connected with the vehicle or until information of a non-connection solution issued by the server is received,
wherein the log information comprises an error keyword and a feature value of the error keyword is generated by the error keyword,
wherein the identification information and the feature value are inputted into a connection solution matching model to obtain the at least one connection solution.

8. The apparatus according to claim 7, wherein the at least one connection solution has corresponding matching degree information, and the execution unit comprises:
an execution subunit, configured to sort the at least one connection solution according to matching degree from high to low, and perform the at least one connection solution, in sequence, from a connection solution having highest matching degree.

9. A connection apparatus (500), comprising:
a receiving module (501), configured to receive identification information of a vehicle sent by a terminal, and receive log information of a failed connection between the terminal and the vehicle;
a first determining module (502), configured to determine at least one connection solution matching the identification information and the log information; and
a first sending module (503), configured to send the at least one connection solution to the terminal,
wherein the first determining module (502) comprises:
a determining unit, configured to determine an error keyword in the log information, and generate a feature value of the error keyword; and
a first matching unit, configured to input the identification information and the feature value into a connection solution matching model to obtain the at least one connection solution;
wherein the first matching unit comprises:
a matching subunit, configured to input the identification information and the feature value into the connection solution matching model to obtain the at least one connection solution and matching degree of each connection solution; and
the first sending module (503) comprises:
a sending unit, configured to send the at least one connection solution and the matching degree of each connection solution to the terminal.

10. A non-transitory computer-readable storage medium storing computer instructions, wherein the computer instructions are used to cause a computer to perform the method according to any one of claims 1 to 3 or any one of claims 4 to 6.

11. A computer program product, wherein the computer program product comprises a computer program which, when executed by a processor, implements the method according to any one of claims 1 to 3 or any one of claims 4 to 6.

## Patentansprüche

1. Verbindungsverfahren, das umfasst:
wenn bestimmt wird, dass eine Verbindung zwischen einer Endvorrichtung und einem Fahrzeug fehlschlägt, Erhalten (S201) von Identifikationsinformationen des Fahrzeugs und von Protokollinformationen der Endvorrichtung;
Senden (S202) der Identifikationsinformationen und der Protokollinformationen an einen Server und Empfangen mindestens einer Verbindungslösung, die von dem Server ausgegeben wird und mit den Identifikationsinformationen und den Protokollinformationen übereinstimmt; und
Steuern (S203) der Endvorrichtung in Abhängigkeit von der mindestens einen Verbindungslösung, um eine Verbindung mit dem Fahrzeug herzustellen,
wobei das Steuern (S203), gemäß der mindestens einen Verbindungslösung, der Endvorrichtung zum Verbinden mit dem Fahrzeug umfasst:
Durchführen der mindestens einen Verbindungslösung in Folge; und erneutes Senden, wenn die Verbindung zwischen der Endvorrichtung und dem Fahrzeug nach dem Ausführen der mindestens einen Verbindungslösung immer noch fehlschlägt, der Protokollinformationen über das Ausführen der mindestens einen Verbindungslösung an den Server, Empfangen mindestens einer Verbindungslösung, die von dem Server ausgegeben wird und sowohl mit den Identifikationsinformationen als auch mit den erneut gesendeten Protokollinformationen übereinstimmt, und Wiederholen eines solchen Schritts, bis die Endvorrichtung erfolgreich mit dem Fahrzeug verbunden ist oder bis Informationen über eine vom Server ausgegebene Nicht-Verbindungslösung empfangen werden,
wobei die Protokollinformationen ein Fehlerschlüsselwort umfassen und ein Merkmalswert des Fehlerschlüsselworts durch das Fehlerschlüsselwort erzeugt wird,
wobei die Identifikationsinformationen und der Merkmalswert in ein Verbindungslösungsübereinstimmungsmodell eingegeben werden, um die mindestens eine Verbindungslösung zu erhalten.

2. Verfahren nach Anspruch 1, wobei die mindestens eine Verbindungslösung entsprechende Informationen über den Übereinstimmungsgrad hat, und das Durchführen der mindestens einen Verbindungslösung in Folge umfasst:
Sortieren der mindestens einen Verbindungslösung nach dem Übereinstimmungsgrad von hoch zu niedrig, und Ausführen der mindestens einen Verbindungslösung in Folge, ausgehend von einer Verbindungslösung mit dem höchsten Übereinstimmungsgrad.

3. Verfahren nach einem der Ansprüche 1 bis 2, wobei eine fehlgeschlagene Verbindung zwischen der Endvorrichtung und den Fahrzeugfehlschlägen umfasst:
eine fehlgeschlagene drahtgebundene Verbindung oder eine fehlgeschlagene Wi-Fi-Verbindung zwischen der Endvorrichtung und dem Fahrzeug; und
das Erhalten der Identifikationsinformationen des Fahrzeugs umfasst:
Erhalten der Identifikationsinformationen des Fahrzeugs unter Verwendung einer Bluetooth-Verbindung zwischen der Endvorrichtung und dem Fahrzeug; optional,
wobei das Erhalten der Identifikationsinformationen des Fahrzeugs umfasst:
Erhalten von Standortinformationen der Endvorrichtung; und
Bestimmen der Identifizierungsinformationen des Fahrzeugs in historischen Verbindungsaufzeichnungen der Endvorrichtung als die Identifizierungsinformationen des Fahrzeugs, wenn die Standortinformationen innerhalb eines voreingestellten Standortbereichs liegen.

4. Verbindungsverfahren, das umfasst:
Empfangen (S301) von Identifikationsinformationen eines Fahrzeugs, die von einer Endvorrichtung gesendet wurden, und Empfangen von Protokollinformationen über eine fehlgeschlagene Verbindung zwischen der Endvorrichtung und dem Fahrzeug;
Bestimmen (S302) mindestens einer Verbindungslösung, die sowohl mit den Identifikationsinformationen als auch mit den Protokollinformationen übereinstimmt; und
Senden (S303) der mindestens einen Verbindungslösung an die Endvorrichtung,
wobei das Bestimmen (S302) der mindestens einen Verbindungslösung, die sowohl mit den Identifikationsinformationen als auch mit den Protokollinformationen übereinstimmt, umfasst:
Bestimmen eines Fehlerschlüsselworts in den Protokollinformationen und Erzeugen eines Merkmalswerts des Fehlerschlüsselworts; und
Eingeben der Identifikationsinformationen und des Merkmalswerts in ein Verbindungslösungsübereinstimmungsmodell, um die mindestens eine Verbindungslösung zu erhalten.

5. Verfahren nach Anspruch 4, wobei das Eingeben der Identifikationsinformationen und des Merkmalswerts in das Verbindungslösungsübereinstimmungsmodell zum Erhalten der mindestens einen Verbindungslösung umfasst:
Eingeben der Identifikationsinformationen und des Merkmalswerts in das Verbindungslösungsübereinstimmungsmodell, um die mindestens eine Verbindungslösung und den Übereinstimmungsgrad jeder Verbindungslösung zu erhalten; und
das Senden (S303) der mindestens einen Verbindungslösung an die Endvorrichtung umfasst:
Senden der mindestens einen Verbindungslösung und des Übereinstimmungsgrads jeder Verbindungslösung an die Endvorrichtung.

6. Verfahren nach einem der Ansprüche 4 bis 5, das ferner Folgendes umfasst:
Trainieren, im Falle des Empfangs neuer Protokollinformationen, die der mindestens einen von der Endvorrichtung gesendeten Verbindungslösung entsprechen, des Verbindungslösungsübereinstimmungsmodells unter Verwendung der neuen Protokollinformationen, um ein aktualisiertes Verbindungslösungsübereinstimmungsmodell zu erhalten;
Erhalten von Informationen über mindestens eine neue Verbindungslösung oder Nicht-Verbindungslösung, die einem neuen Fehlerprotokoll entspricht, unter Verwendung des aktualisierten Verbindungslösungsübereinstimmungsmodell; und
Senden der Informationen über die mindestens eine neue Verbindungslösung oder die Nicht-Verbindungslösung an die Endvorrichtung.

7. Verbindungsvorrichtung (400), umfassend:
ein Erfassungsmodul (401), das dafür konfiguriert ist, wenn bestimmt wird, dass eine Verbindung zwischen einer Endvorrichtung und einem Fahrzeug fehlschlägt, Identifikationsinformationen des Fahrzeugs und Protokollinformationen der Endvorrichtung zu erhalten;
ein Sendemodul (402), das dafür konfiguriert ist, die Identifikationsinformationen und die Protokollinformationen an einen Server zu senden und mindestens eine Verbindungslösung zu empfangen, die von dem Server ausgegeben wird und mit den Identifikationsinformationen und den Protokollinformationen übereinstimmt; und
ein Verbindungsmodul (403), das dafür konfiguriert ist, entsprechend der mindestens einen Verbindungslösung die Endvorrichtung zu steuern, um eine Verbindung mit dem Fahrzeug herzustellen,
wobei das Verbindungsmodul (403) umfasst:
eine Ausführungseinheit, die dafür konfiguriert ist, die mindestens eine Verbindungslösung nacheinander auszuführen; und wenn die Verbindung zwischen der Endvorrichtung und dem Fahrzeug nach dem Ausführen der mindestens einen Verbindungslösung immer noch fehlschlägt, die Protokollinformationen über das Ausführen der mindestens einen Verbindungslösung an den Server erneut zu senden, Empfangen mindestens einer Verbindungslösung, die von dem Server ausgegeben wird und sowohl mit den Identifikationsinformationen als auch mit den erneut gesendeten Protokollinformationen übereinstimmt, und Wiederholen eines solchen Schritts, bis die Endvorrichtung erfolgreich mit dem Fahrzeug verbunden ist oder bis Informationen über eine vom Server ausgegebene Nicht-Verbindungslösung empfangen werden,
wobei die Protokollinformationen ein Fehlerschlüsselwort umfassen und ein Merkmalswert des Fehlerschlüsselworts durch das Fehlerschlüsselwort erzeugt wird,
wobei die Identifikationsinformationen und der Merkmalswert in ein Verbindungslösungsübereinstimmungsmodell eingegeben werden, um die mindestens eine Verbindungslösung zu erhalten.

8. Vorrichtung nach Anspruch 7, wobei die mindestens eine Verbindungslösung entsprechende Informationen über den Übereinstimmungsgrad aufweist, und die Ausführungseinheit umfasst:
eine Ausführungsuntereinheit, die für Folgendes konfiguriert ist: Sortieren der mindestens einen Verbindungslösung nach dem Übereinstimmungsgrad von hoch zu niedrig, und Ausführen der mindestens einen Verbindungslösung in Folge, ausgehend von einer Verbindungslösung mit dem höchsten Übereinstimmungsgrad.

9. Verbindungsvorrichtung (500), umfassend:
ein Empfangsmodul (501), das für Folgendes konfiguriert ist: Empfangen von Identifikationsinformationen eines Fahrzeugs, die von einer Endvorrichtung gesendet wurden, und Empfangen von Protokollinformationen über eine fehlgeschlagene Verbindung zwischen der Endvorrichtung und dem Fahrzeug;
ein erstes Bestimmungsmodul (502), das dafür konfiguriert ist, mindestens eine Verbindungslösung zu bestimmen, die mit den Identifizierungsinformationen und den Protokollinformationen übereinstimmt; und
ein erstes Sendemodul (503), das dafür konfiguriert ist, die mindestens eine Verbindungslösung an die Endvorrichtung zu senden,
wobei das erste Bestimmungsmodul (502) umfasst:
eine Bestimmungseinheit, die dafür bestimmt ist, ein Fehlerschlüsselwort in den Protokollinformationen zu bestimmen und einen Merkmalswert des Fehlerschlüsselworts zu erzeugen; und
eine erste Übereinstimmungseinheit, die dafür konfiguriert ist, die Identifikationsinformationen und den Merkmalswert in ein Verbindungslösungsübereinstimmungsmodell einzugeben, um die mindestens eine Verbindungslösung zu erhalten;
wobei die erste Übereinstimmungseinheit umfasst:
eine Übereinstimmungsuntereinheit, die dafür konfiguriert ist, die Identifikationsinformationen und den Merkmalswert in das Verbindungslösungsübereinstimmungsmodell einzugeben, um die mindestens eine Verbindungslösung und den Übereinstimmungsgrad jeder Verbindungslösung zu erhalten; und
wobei das erste Sendemodul (503) umfasst:
eine Sendeeinheit, die dafür konfiguriert ist, die mindestens eine Verbindungslösung und den Übereinstimmungsgrad jeder Verbindungslösung an die Endvorrichtung zu senden.

10. Nicht-flüchtiges, computerlesbares Speichermedium, das Computerbefehle speichert, wobei die Computerbefehle verwendet werden, um einen Computer zu veranlassen, das Verfahren nach einem der Ansprüche 1 bis 3 oder einem der Ansprüche 4 bis 6 durchzuführen.

11. Computerprogrammprodukt, wobei das Computerprogrammprodukt ein Computerprogramm umfasst, das, wenn es von einem Prozessor ausgeführt wird, das Verfahren nach einem der Ansprüche 1 bis 3 oder einem der Ansprüche 4 bis 6 implementiert.

## Revendications

1. Procédé de connexion comprenant :
lorsqu'il est déterminé qu'une connexion entre un terminal et un véhicule échoue, l'obtention (S201) d'informations d'identification du véhicule et d'informations de journal du terminal ;
l'envoi (S202) des informations d'identification et des informations de journal à un serveur, et la réception d'au moins une solution de connexion qui est émise par le serveur et concorde avec les informations d'identification et les informations de journal ; et
la commande (S203), selon l'au moins une solution de connexion, du terminal pour qu'il se connecte au véhicule,
dans lequel la commande (S203), selon l'au moins une solution de connexion, du terminal pour qu'il se connecte au véhicule comprend :
la réalisation de l'au moins une solution de connexion en séquence ; et le renvoi, si la connexion entre le terminal et le véhicule échoue toujours après la réalisation de l'au moins une solution de connexion, des informations de journal de la réalisation de l'au moins une solution de connexion au serveur, la réception de l'au moins une solution de connexion qui est émise par le serveur et concorde avec à la fois les informations d'identification et les informations de journal renvoyées, et la répétition de cette étape jusqu'à ce que le terminal soit connecté avec succès au véhicule ou jusqu'à ce que des informations d'une solution de non-connexion émise par le serveur soient reçues,
dans lequel les informations de journal comprennent un mot-clé d'erreur et une valeur caractéristique du mot-clé d'erreur est générée par le mot-clé d'erreur,
dans lequel les informations d'identification et la valeur caractéristique sont fournies en entrée à un modèle de mise en concordance de solution de connexion afin d'obtenir l'au moins une solution de connexion.

2. Procédé selon la revendication 1, dans lequel l'au moins une solution de connexion comporte des informations de degré de concordance correspondantes, et la réalisation de l'au moins une solution de connexion en séquence comprend :
le tri de l'au moins une solution de connexion selon le degré de concordance d'élevé à faible, et la réalisation de l'au moins une solution de connexion, en séquence, à partir d'une solution de connexion ayant le degré de concordance le plus élevé.

3. Procédé selon l'une quelconque des revendications 1 ou 2, dans lequel l'échec d'une connexion entre le terminal et le véhicule comprend :
l'échec d'une connexion filaire ou l'échec d'une connexion Wi-Fi entre le terminal et le véhicule ; et
l'obtention des informations d'identification du véhicule comprend :
l'obtention des informations d'identification du véhicule au moyen d'une connexion Bluetooth entre le terminal et le véhicule ; éventuellement,
l'obtention des informations d'identification du véhicule comprend :
l'obtention d'informations d'emplacement du terminal ; et
la détermination, lorsque les informations d'emplacement se situent dans une portée d'emplacement prédéfinie, des informations d'identification du véhicule dans un historique d'enregistrements de connexion du terminal en tant qu'informations d'identification du véhicule.

4. Procédé de connexion, comprenant :
la réception (S301) d'informations d'identification d'un véhicule envoyées par un terminal, et la réception d'informations de journal d'un échec de connexion entre le terminal et le véhicule ;
la détermination (S302) d'au moins une solution de connexion concordant avec à la fois les informations d'identification et les informations de journal ; et
l'envoi (S303) de l'au moins une solution de connexion au terminal,
dans lequel la détermination (S302) de l'au moins une solution de connexion concordant avec à la fois les informations d'identification et les informations de journal comprend :
la détermination d'un mot-clé d'erreur dans les informations de journal, et la génération d'une valeur caractéristique du mot-clé d'erreur ; et
la fourniture en entrée des informations d'identification et de la valeur caractéristique à un modèle de mise en concordance de solution de connexion afin d'obtenir l'au moins une solution de connexion.

5. Procédé selon la revendication 4, dans lequel la fourniture en entrée des informations d'identification et de la valeur caractéristique au modèle de mise en concordance de solution de connexion afin d'obtenir l'au moins une solution de connexion comprend :
la fourniture en entrée des informations d'identification et de la valeur caractéristique au modèle de mise en concordance de solution de connexion afin d'obtenir l'au moins une solution de connexion et un degré de concordance de chaque solution de connexion ; et
l'envoi (S303) de l'au moins une solution de connexion au terminal comprend :
l'envoi au terminal de l'au moins une solution de connexion et du degré de concordance de chaque solution de connexion.

6. Procédé selon l'une quelconque des revendications 4 et 5, comprenant en outre :
l'entraînement, en cas de réception de nouvelles informations de journal correspondant à l'au moins une solution de connexion envoyées par le terminal, du modèle de mise en concordance de solution de connexion à l'aide des nouvelles informations de journal, de manière à obtenir un modèle de mise en concordance de solution de connexion actualisé ;
l'obtention d'informations d'au moins une nouvelle solution de connexion ou solution de non-connexion correspondant à un nouveau journal d'échec à l'aide du modèle de mise en concordance de solution de connexion actualisé ; et
l'envoi au terminal des informations de l'au moins une nouvelle solution de connexion ou de la solution de non-connexion.

7. Appareil de connexion (400) comprenant :
un module d'obtention (401), configuré pour obtenir, lorsqu'il est déterminé qu'une connexion entre un terminal et un véhicule échoue, des informations d'identification du véhicule et des informations de journal du terminal ;
un module d'envoi (402), configuré pour envoyer les informations d'identification et les informations de journal à un serveur, et recevoir au moins une solution de connexion qui est émise par le serveur et concorde avec les informations d'identification et les informations de journal ; et
un module de connexion (403), configuré pour commander, selon l'au moins une solution de connexion, la connexion du terminal au véhicule,
dans lequel le module de connexion (403) comprend :
une unité d'exécution, configurée pour réaliser l'au moins une solution de connexion en séquence ; et si la connexion entre le terminal et le véhicule échoue toujours après la réalisation de l'au moins une solution de connexion, renvoyer les informations de journal de la réalisation de l'au moins une solution de connexion au serveur, recevoir au moins une solution de connexion qui est émise par le serveur et concorde avec à la fois les informations d'identification et les informations de journal renvoyées, et répéter cette étape jusqu'à ce que le terminal soit connecté avec succès au véhicule ou jusqu'à ce que des informations d'une solution de non-connexion émise par le serveur soient reçues,
dans lequel les informations de journal comprennent un mot-clé d'erreur et une valeur caractéristique du mot-clé d'erreur est générée par le mot-clé d'erreur,
dans lequel les informations d'identification et la valeur caractéristique sont fournies en entrée à un modèle de mise en concordance de solution de connexion afin d'obtenir l'au moins une solution de connexion.

8. Appareil selon la revendication 7, dans lequel l'au moins une solution de connexion a des informations de degré de concordance correspondantes, et l'unité d'exécution comprend :
une sous-unité d'exécution, configurée pour trier l'au moins une solution de connexion selon le degré de concordance, d'élevé à faible, et réaliser l'au moins une solution de connexion, en séquence, à partir d'une solution de connexion ayant le degré de concordance le plus élevé.

9. Appareil de connexion (500) comprenant :
un module de réception (501), configuré pour recevoir des informations d'identification d'un véhicule envoyées par un terminal, et recevoir des informations de journal d'un échec de connexion entre le terminal et le véhicule ;
un premier module de détermination (502), configuré pour déterminer au moins une solution de connexion concordant avec les informations d'identification et les informations de journal ; et
un premier module d'envoi (503), configuré pour envoyer l'au moins une solution de connexion au terminal,
dans lequel le premier module de détermination (502) comprend :
une unité de détermination, configurée pour déterminer un mot-clé d'erreur dans les informations de journal, et générer une valeur caractéristique du mot-clé d'erreur ; et
une première unité de mise en concordance, configurée pour fournir en entrée les informations d'identification et la valeur caractéristique à un modèle de mise en concordance de solution de connexion afin d'obtenir l'au moins une solution de connexion ;
dans lequel la première unité de mise en concordance comprend :
une sous-unité de mise en concordance, configurée pour fournir en entrée les informations d'identification et la valeur caractéristique au modèle de mise en concordance de solution de connexion afin d'obtenir l'au moins une solution de connexion et le degré de concordance de chaque solution de connexion ; et
le premier module d'envoi (503) comprend :
une unité d'envoi, configurée pour envoyer au terminal l'au moins une solution de connexion et le degré de concordance de chaque solution de connexion.

10. Support de stockage non transitoire lisible par ordinateur stockant des instructions d'ordinateur, dans lequel les instructions d'ordinateur sont utilisées pour amener un ordinateur à réaliser le procédé selon l'une quelconque des revendications 1 à 3 ou l'une quelconque des revendications 4 à 6.

11. Produit programme d'ordinateur, dans lequel le produit programme d'ordinateur comprend un programme d'ordinateur qui, lorsqu'il est exécuté par un processeur, met en oeuvre le procédé selon l'une quelconque des revendications 1 à 3 ou l'une quelconque des revendications 4 à 6.
